# EUROPEAN PATENT APPLICATION

(11) **EP 1 748 437 A1**
(43) Date of publication of application: **31.01.2007**
(21) Application number: 05739213.6
(22) Date of filing: 10.05.2005
(51) Int. Cl.: G11B 27/00, G06F 12/00, G11B 20/10, H04N 5/91

(54) **IMAGE DATA MANAGEMENT METHOD AND MANAGEMENT PROGRAM**

(30) Priority: 20.05.2004 JP 2004150876
(71) Applicant: KONICA MINOLTA HOLDINGS, INC., Tokyo 100-0005 (JP)
(72) Inventor: Hung, Po-Chieh Konica Minolta Techn. Center Inc., Hachioji-shi Tokyo 1928505 (JP)
(74) Representative: Roberts, Mark Peter
(86) International application number: PCT/JP2005/008501
(87) International publication number: WO 2005/114664

(57) **Abstract**

A management program for managing a plurality of image data recorded on the recording section by storing the image data into a destination recording section according to a unit of recording medium or image data type, wherein original image data as a basis for the missing or modified image data are read from recording section at predetermined timings and are restored, or the information for identifying the recording site of the original image data for the missing or modified image data is displayed, thereby the missing or modified image data are automatically restored so that image data in an electronic album is surely stored and managed.

## Description

### Field of the Technology

The present invention relates to a management program for storing and managing image data.

### Background of Art

Various forms of services related to photographs have been provided in recent years. For example, a user takes a picture by a digital camera and carries a digital camera or a digital camera medium into a photo shop such as a Minilab. Using the unmanned terminal (kiosk) or shop terminal installed in the photo shop, the image data recorded in the digital camera or medium can be written onto a recording medium such as a CD-R or DVD-R (e.g., Patent Document 1).

In another form of service, a user takes a picture by a film camera and carries the film containing a photographed image into a photo shop such as a Minilab. After developing the film, the photo shop uses a scanner or similar reading device to read the image data, which is then written onto a recording medium such as a CD-R or DVD-R to be handed over to the user.

In a further form of service, the image data read from the digital camera, medium or film is transformed into the image data of the file format that can be reproduced on the image reproduction apparatus such as a DVD player, DVD recorder, HDD recorder or game machine, and the original image data and transformed image data are written on the recording medium such as a CD-R or DVD-R.
[Patent Document 1] Unexamined Japanese Patent Application Publication No.H09-182373 (pp. 4-6, Fig. 3).

Use of the aforementioned services makes it possible to acquire a recording medium containing the image data recorded in the digital camera or medium and the image data converted into the image reproduction apparatus. Further, if the image data recorded on a plurality of recording media is backed up on the recording section such as a hard disk of the computer apparatus using predetermined application, the data can be stored and managed collectively as the so-called electronic album.

The image data of this electronic album is preferably stored and managed without being deleted. The application of the electronic album is capable of disabling image data to be deleted. For example, a user may use other application (e.g., explorer of Windows (registered trademark)) to delete the image data intentionally or inadvertently. Alternatively, of a plurality of types of image data such as the original image data, thumbnail image data and screen-nail image data, only the specific type of image data may be deleted by the user. In this case, the data is not recorded on the hard disk although it has been registered in the electronic album. Thus, the aforementioned image data cannot be displayed.

The contents of the image data recorded on the recording medium may be changed for some reason (e.g., overwriting of image data, partial missing of the data and modification of image data). To be more specific, the inherent properties of the image data may be damaged in some cases. In such as a case, although the data has been registered in the electronic album, the aforementioned image data cannot be displayed in the form being recorded on the recording medium.

Occurrence of the aforementioned problems is not limited to the still image data based on the photographic image. Such problems occur to the animation data obtained by photographing with a digital movie camera and others, music data acquired via the Internet, and content data.

### SUMMARY OF THE INVENTION

The object of the present invention is to solve the aforementioned problems and to provide a management program capable of automatically restoring the missing image data or the image data of modified contents.

One of the embodiments of the present invention to achieve the aforementioned object is a management program for storing into the second recording section a plurality of image data items recorded on the first recording section, and for managing the aforementioned plurality of image data items, wherein a computer is designed to function as:
a data detection section for detecting the missing image data described in the aforementioned information file but not in the aforementioned second recording section, by comparison between the configuration of the image data recorded on the aforementioned second recording section and that of the image data recorded on the information file containing the management information; and
a data restoration section which, if the aforementioned missing image data is present, refers to the aforementioned information file and reads the aforementioned missing image data from the aforementioned first recording section, thereby recording it in the aforementioned second recording section.

### BRIEF DESCRIPTION OF THE DRAWINGS

Fig. 1 is a diagram schematically representing a configuration of a recording apparatus and data management apparatus in the first Example of the present invention;
Fig. 2 is a diagram schematically representing another configuration of the data management apparatus in the first Example of the present invention;
Fig. 3 is a diagram schematically representing still another configuration of the data management apparatus in the first Example of the present invention;
Fig. 4 is a diagram schematically representing a further configuration of the data management apparatus in the first Example of the present invention;
Fig. 5 is a diagram schematically representing a still further configuration of the data management apparatus in the first Example of the present invention;
Fig. 6 is a block diagram representing the means of the data management apparatus in the first Example of the present invention;
Fig. 7 is a flow chart showing the recording medium creating procedure using the recording apparatus in the first Example of the present invention;
Fig. 8 is a flow chart showing the image data storing procedure using the data management apparatus in the first Example of the present invention;
Fig. 9 is a flow chart showing the image data restoration procedure using the data management apparatus in the first Example of the present invention;
Fig. 10 is a diagram showing the data recording structure in the recording medium in the first Example of the present invention;
Fig. 11 is a diagram showing the data recording structure in the hard disk of the data management apparatus in the first Example of the present invention;
Fig. 12 is a diagram schematically representing the data recording area in the recording medium in the first Example of the present invention;
Fig. 13 is a diagram schematically representing the structure of the recording medium (CD-R) in the first Example of the present invention;
Fig. 14 is a diagram representing an example of the screen configuration displayed on the display section of the data management apparatus in the first Example of the present invention;
Fig. 15 is a diagram representing an example of the screen configuration displayed on the display section of the data management apparatus in the first Example of the present invention;
Fig. 16 is a flow chart showing the image data restoration procedure using the data management apparatus in the second Example of the present invention;
Fig. 17 is a diagram showing the data recording structure in the hard disk of the data management apparatus in the second Example of the present invention;
Fig. 18 is a diagram representing an example of the screen configuration displayed on the display section of the data management apparatus in the second Example of the present invention;
Fig. 19 is a block diagram showing the means of the data management apparatus in the third Example of the present invention; and
Fig. 20 is a flow chart showing the image data restoration procedure using the data management apparatus in the third Example of the present invention.

### DETAILED DESCRIPTION OF THE PREFERRED EMBODIMENTS

The aforementioned object of the present invention can be achieved by the following structures:
(1) A management method for storing into the second recording section a plurality of image data items recorded on the first recording section, based on the information file containing the management information, and for managing the aforementioned plurality of image data items, wherein the aforementioned management method includes:
   a difference detection process for detecting the difference between the first data configuration and second data configuration by making comparison between the first data configuration for the image data recorded on the aforementioned second recording section, and the second data configuration for the image data described in the aforementioned information file; and
   a data restoration process wherein, if there is any difference between the aforementioned first data configuration and second data configuration, the image data corresponding to the aforementioned different configuration is read from the aforementioned first recording section by making reference to the aforementioned information file, and is recorded into the aforementioned second recording section.
(2) A management program for storing into the second recording section a plurality of image data items recorded on the first recording section, and for managing the aforementioned plurality of image data items, wherein the management program is configured to allow a computer to function as:
   a data detection section for detecting the missing image data described in the aforementioned information file but not in the aforementioned second recording section, by comparison between the configuration of the image data recorded on the aforementioned second recording section and that of the image data recorded on the information file containing the management information; and
   a data restoration section which, if the aforementioned missing image data is present, refers to the aforementioned information file and reads the aforementioned missing image data from the aforementioned first recording section, thereby recording it in the aforementioned second recording section.
(3) A management program for storing into the second recording section according to type a plurality of image data items recorded on the first recording section, and for managing the aforementioned image data items, wherein the management program is configured to allow a computer to function as:
   a data detection section for determining whether or not the image data recorded on the aforementioned second recording section is configured according to a plurality of predetermined types, and for detecting the image data of the missing type not recorded on the aforementioned second recording section by checking a plurality of the aforementioned types; and
   a data restoration section wherein, if the aforementioned image data of the missing type is present, the aforementioned image data of the missing type is read from the aforementioned first recording section by making reference to the information file containing the management information and is recorded on the aforementioned second recording section.
(4) A management program for storing into the second recording section a plurality of image data items recorded on the first recording section, and for managing the aforementioned plurality of image data items, wherein the management program is configured to allow a computer to function as:
   a data detection section for checking the image data recorded on the aforementioned second recording section to find out the image data whose contents have been modified; and
   a data restoration section wherein, if there is image data whose contents have been modified, the image data as a basis for the image data whose contents have been modified is read out from the aforementioned first recording section by making reference to the information file containing the management information, and is recorded on the aforementioned second recording section.
(5) The aforementioned information file preferably contains at least the information for identifying the aforementioned first recording section, and the information for identifying the recording site of the aforementioned image data in the aforementioned first recording section.
(6) The aforementioned data restoration section can be designed in such a way that, when the aforementioned first recording section is not accessible, the display section indicates:
   the information for identifying the aforementioned first recording section; and
   the information for identifying the recording site for the aforementioned image data as a basis of the aforementioned missing image data or contents-modified image data in the aforementioned first recording section.
(7) The aforementioned management program is capable to making the computer to function as the aforementioned data detection section and data restoration section at the start of the program for indicating the image on the display section based on the aforementioned image data, at predetermined time intervals, or a predetermined point of time.
(8) When the aforementioned image data is recorded on the first recording section, the image data may be recorded in the compressed form or in the form where the image data cannot be deleted or overwritten.
(9) The aforementioned first and second recording sections can be designed in such a way that the aforementioned image data is stored into the folder of the name generated in conformity to a predetermined rule according to the unit of the aforementioned first recording section or according to the aforementioned type.

As described above, according to the structures of the present invention, comparison is made between the configuration of the image data recorded on the information file and that actually recorded on the destination recording site (second recording section). When the relevant image data is missing, when a predetermined type of image data is missing while a plurality of types of image data are stored and managed, or when the contents of the image data have been changed, the image data as a basis of the missing image data or contents-modified image data is automatically captured from the original recording site (first recording section) so that the process of restoration is carried out. Alternatively, the information for specifying the recording site of the image data as a basis of the missing image data or contents-modified image data is indicated on the display section. This arrangement ensures reliable storage and management of the image data in the electronic album.

The management method and management program of the present invention ensure reliable storage and management of the image data backed up from the original recording site (e.g., recording medium) onto the destination recording site (e.g., hard disk).

This is because the management program provides the following control: At the start of the display program or at predetermined timed intervals, the configuration of the image data described in the information file are compared with the configuration of the image data actually recorded on the destination recording site. When the relevant image data is missing, the missing image data is captured from the original recording site to perform restoration, if the original recording site is accessible. If the recording site is inaccessible, the information for identifying the recording site of the missing image data is indicated on the display section.

Further, when a plurality of types of image data are stored and managed for each type and predetermined types of image data are missing, the missing image data is captured from the original recording site to perform restoration, if the original recording site is accessible. If the original recording site is inaccessible, the information for identifying the recording site of the missing types of image data is indicated on the display section.

When the contents of the image data have been modified, the image data as a basis for the modified image data is captured from the original recording site to perform restoration, if the original recording site is accessible. If the recording site is inaccessible, the information for identifying the recording site of the image data as a basis of the modified image data is displayed on the display section.

A management program as one of the preferred embodiment of the present invention is characterized in that a plurality of image data items recorded on the original recording medium of the recording site are stored in the recording section (e.g., hard disk) of the destination recording site, and are managed according to recording medium or image data type (e.g., original image data, thumbnail image data and screen-nail image data). In this management program, the image data as a basis for the missing or modified image data are read from the recording medium of the original recording site at predetermined timed intervals and are restored, or the information for identifying the recording site of the image data as a basis for the missing or modified image data is indicated on the display section when:
there is missing image data registered in the information file but not recorded on the recording section of the destination recording site;
a specific type of image data items out of a plurality of predetermined types of image data items is missing; or
there is a modification in the contents of the image data recorded on the recording section of the destination recording site.

Thus, despite the presence of missing or modified image data, such image data is automatically restored. This arrangement ensures reliable storage and management of the image data of the electronic album.

### [Example 1]

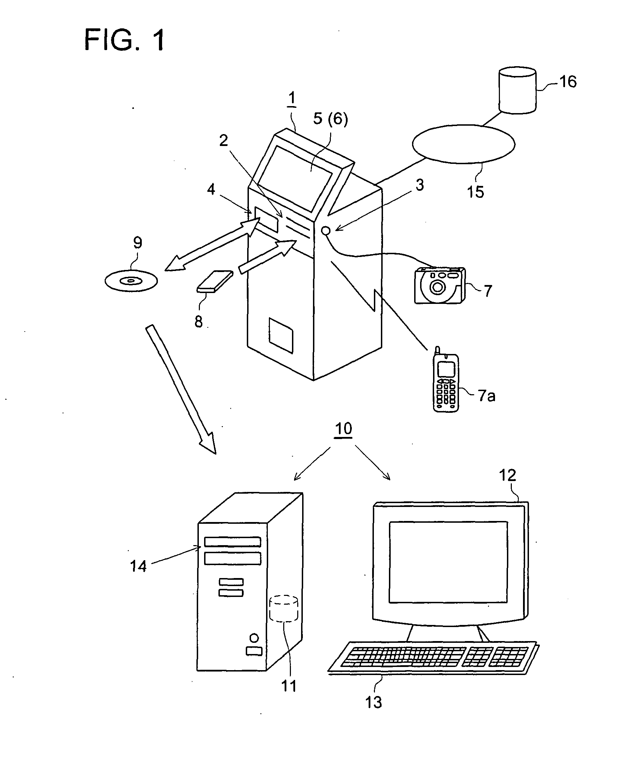

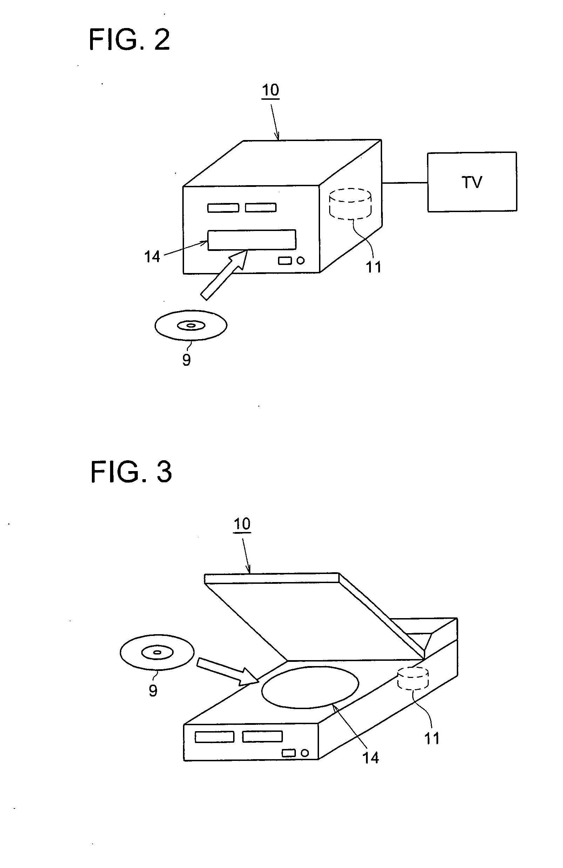

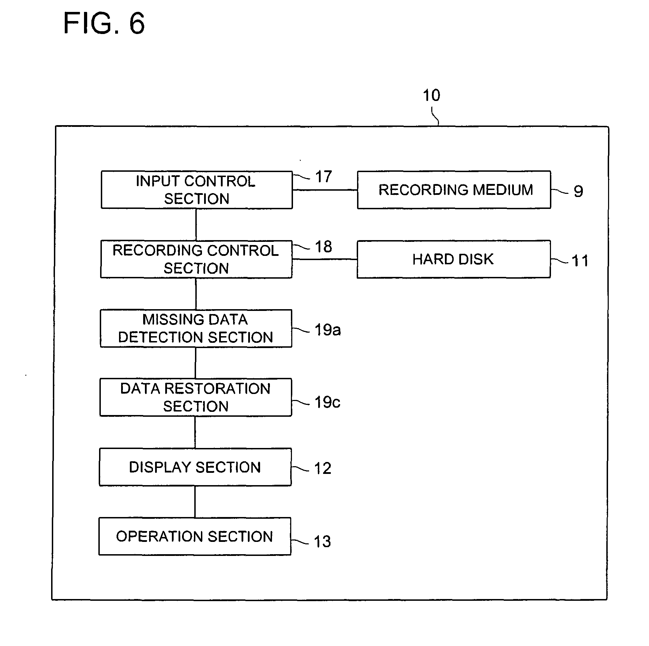

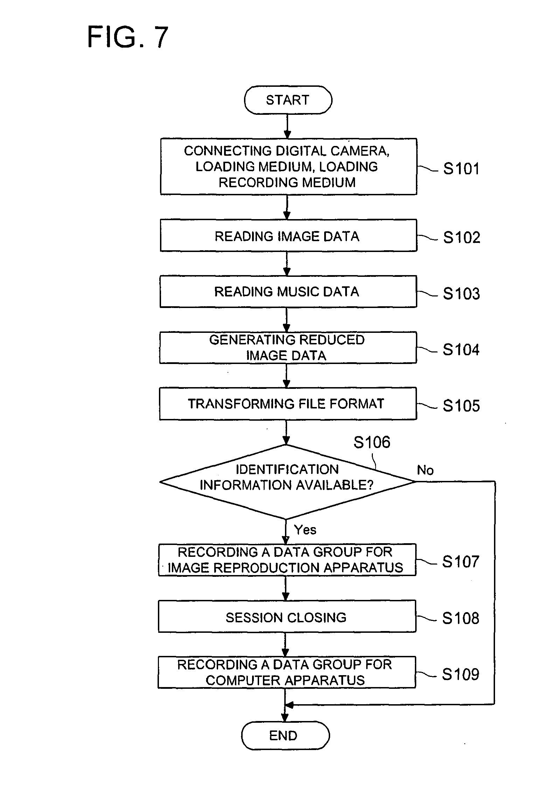

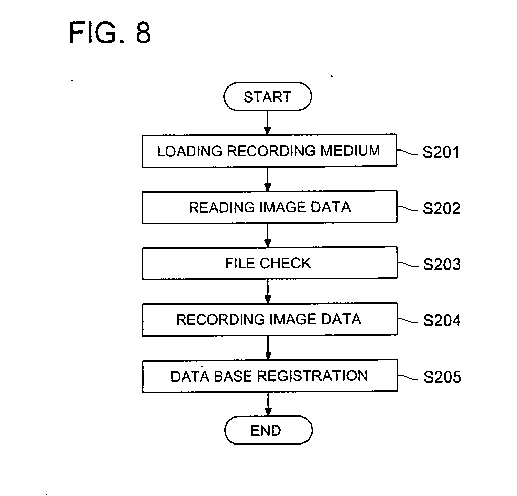

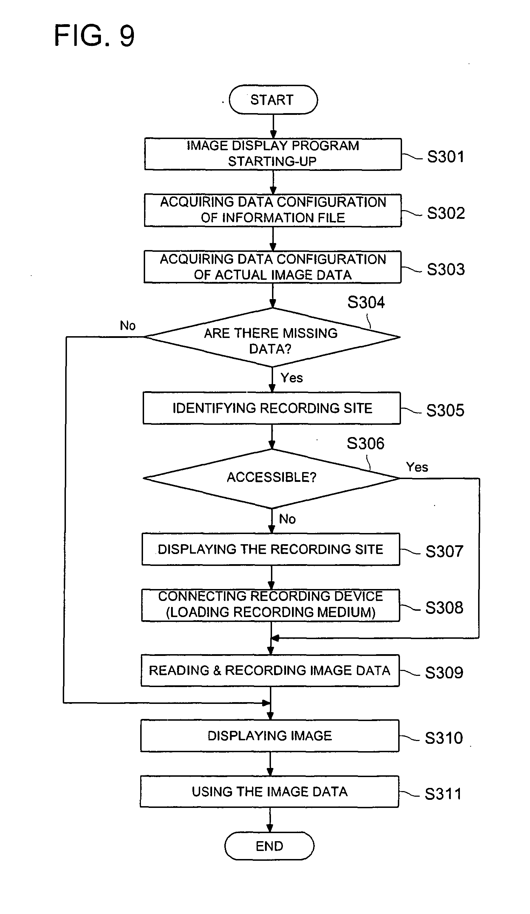

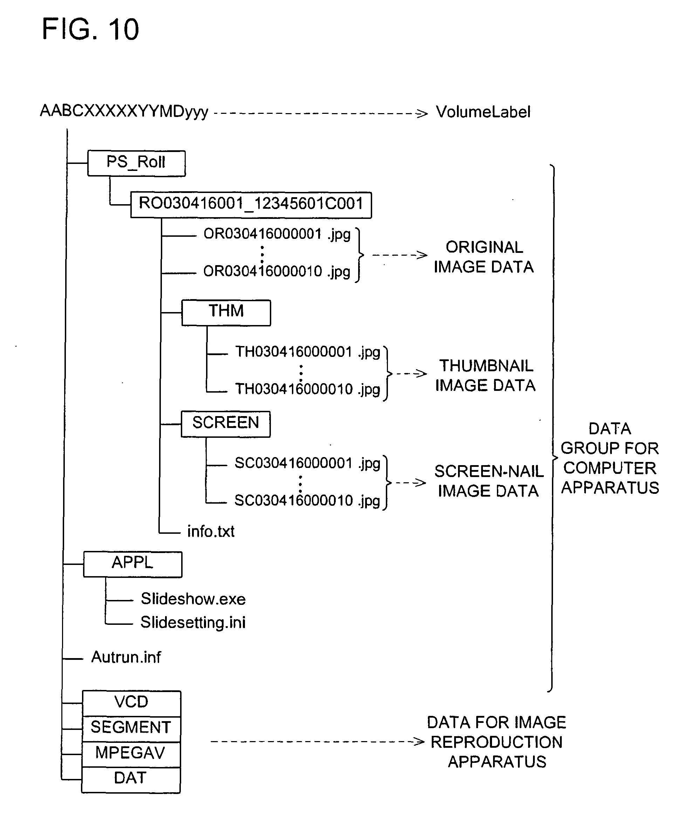

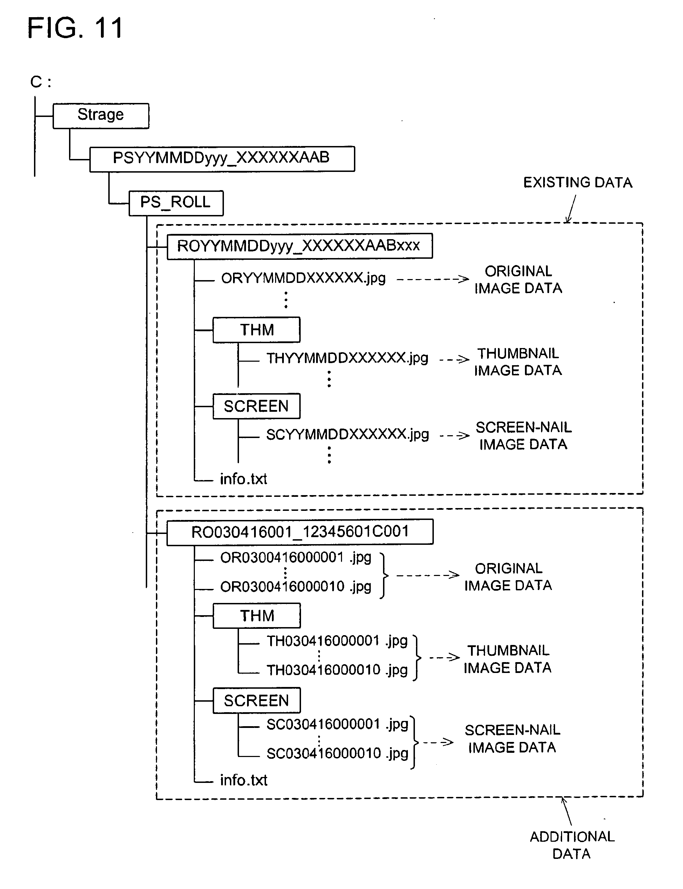

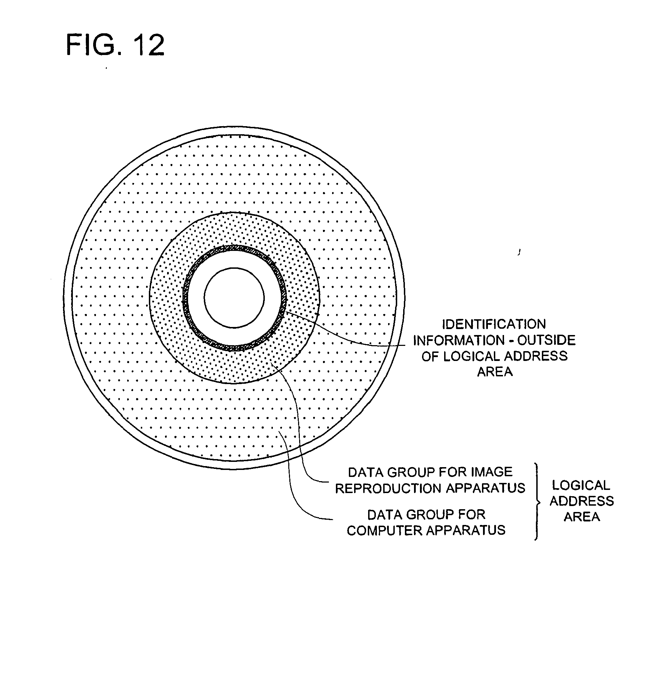

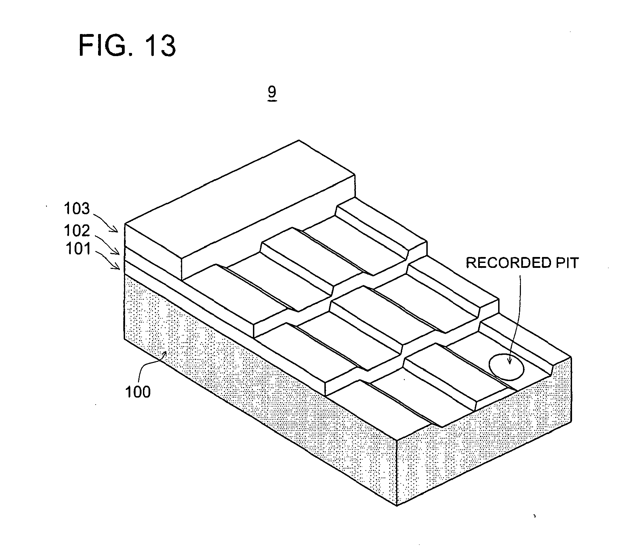

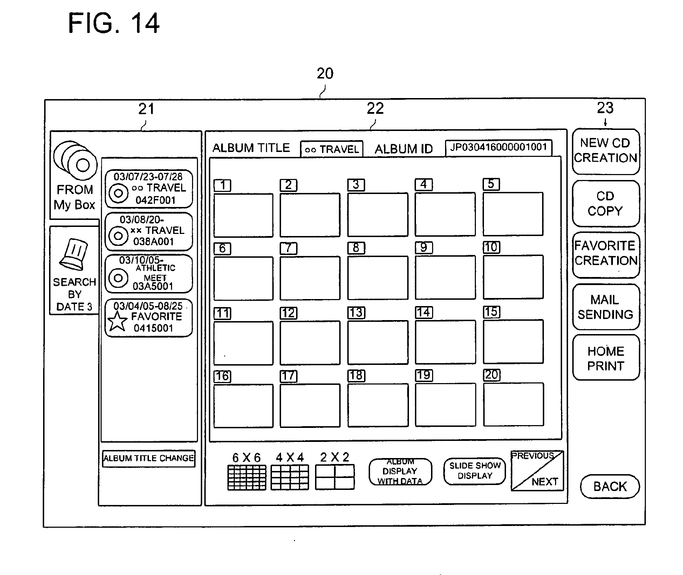

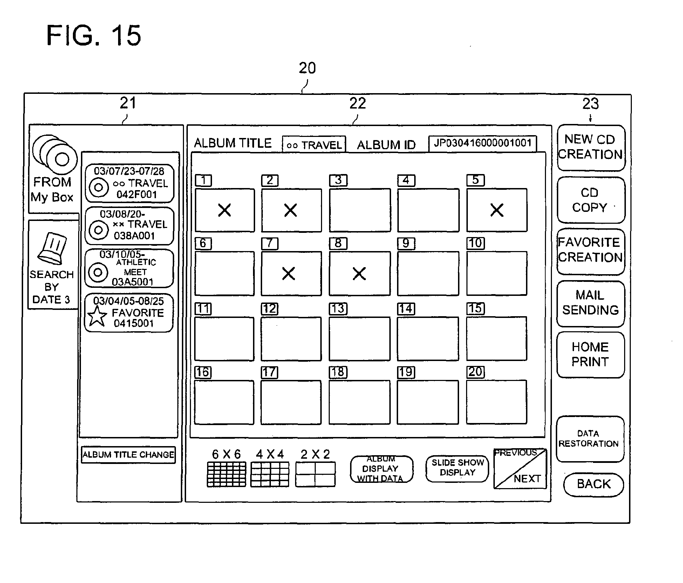

To clarify the details of the aforementioned embodiment, the following describes the management program of the first Example according to the present invention with reference to Figs. 1 through 15. Fig. 1 is a diagram schematically representing a configuration of a recording apparatus and data management apparatus in the first Example of the present invention. Figs. 2 through 5 are diagrams schematically representing the configurations of the data management apparatus in the first Example of the present invention. Fig. 6 is a block diagram representing the means of the data management apparatus. Fig. 7 is a flow chart showing the recording medium creating procedure using the recording apparatus. Fig. 8 is a flow chart showing the image data storing procedure using the data management apparatus. Fig. 9 is a flow chart showing the image data restoration procedure using the data management apparatus. Figs. 10 and 11 are diagrams showing the data recording structure. Fig. 12 is a diagram schematically representing the data recording area in the recording medium. Fig. 13 is a diagram schematically representing the structure of the recording medium (CD-R). Figs. 14 and 15 are the diagrams representing an example of the screen configuration displayed on the display section of the data management apparatus. The following description refers to the case wherein the image data recorded on the recording medium is stored on the hard disk of the data management apparatus and is managed. However, the image data recording site and the recording section of the recording site are not restricted thereto.

As shown in Fig. 1, the system of the present Example contains the recording apparatus 1 for creating the recording medium 9, and the data management apparatus 10 for storing, managing and restoring the image data (wherein still image data, animation data, image information and such related data are collectively referred to as "image data") stored in the recording medium 9. The recording apparatus 1 includes:
a medium loading section 2 for loading such a recording medium (hereinafter referred to as "medium 8") as a smart medium, Compact Flash (registered trademark), Memory Stick (registered trademark), SD memory card, multi-medium card;
an equipment connection 3 for connecting a photographing device such as a digital camera 7 (including both the digital still camera and digital movie camera) and a camera-equipped cellular mobile telephone 7a by a wired or wireless means or by infrared ray;
an input control section such as the network connection and others for downloading the image data from the web server 16a through the communications network 15 such as the Internet;
a recording medium loading section 4 for loading the recording medium 9 such as the CD-R/RW, DVD±R/RW, DVD-RAM, Blu-ray disc containing the image data read from the medium 8 and digital camera 7 or downloaded from the web server 16a, and the image data converted into the reproducible form by a DVD player, DVD recorder, HDD recorder and game machine;
an operation section 6 such as a button, keyboard, mouse and others; and
a display section 5 such as LCD and CRT (wherein the figure shows a touch panel also serving as the operation section 6 and display section 5).

The data management apparatus 10 includes at least a recording medium loading section 14 for loading the recording medium 9, and a recording section for storing the image data (which may be an internal hard disk 11, external hard disk, a home server 16b connected to the data management apparatus 10 through the network or a web server 16a). The means of this data management apparatus 10 can be shown by the block diagram of Fig. 6. To be more specific, it includes:
an input control section 17 for reading the image data from the recording medium 9 loaded onto the recording medium loading section 14;
a recording control section 18 for controlling the recording of the image data onto the recording section such as a hard disk 11;
a missing data detection section 19a for detecting the image data having been registered in the information file but not present actually (hereinafter referred to as "missing image data") through comparison between the configuration of the image data described in the information file that of the image data actually recorded on the recording section;
a data restoration section 19c allowing the display section 12 to display the information for acquiring the aforementioned image data from the recording medium 9 (which may include other recording sections such as a home server 16b and web server 16a if recorded thereon) of the recording site of the missing image data, or the information for identifying the recording site of the aforementioned image data;
a display section 12 such as a monitor; and
an operation section 13 such as a keyboard or mouse.

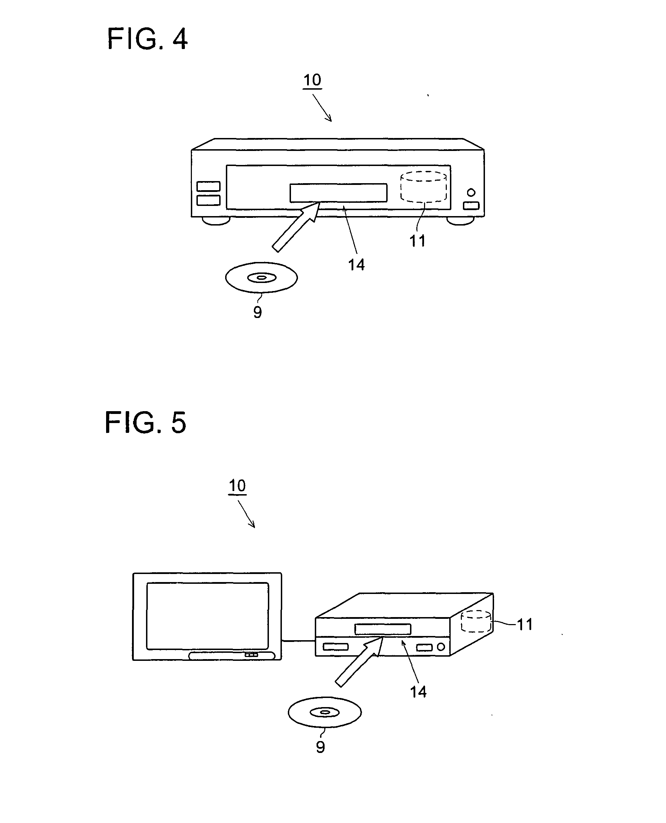

The aforementioned means may be arranged on the data management apparatus 10 as hardware. Alternatively, it can be arranged as a management program that allows a computer to function as at least a missing data detection section 19a and data restoration section 19c, wherein this management program is installed on the data management apparatus 10 for execution. Fig. 1 shows the case of using the personal computer as the data management apparatus 10. The data management apparatus 10 can be arranged in any desired form. For example, it can be designed as a special-purpose set top box as shown in Fig. 2, a portable writer as shown in Fig. 3, an HDD recorder, DVD recorder or game machine equipped with a computation processing section as shown in Fig. 4, or a car navigation apparatus equipped with a computation processing section as shown in Fig. 5.

The following describes the image data restoration procedure using a data management apparatus 10. For ease of explanation, the following describes the procedure for creating a recording medium 9 using the recording apparatus 1, and for storing the image data recorded on the recording medium 9 in the data management apparatus 10. The procedure for creating a recording medium 9 using the recording apparatus 1 of the aforementioned configuration will be described with reference to the flow chart diagram of Fig. 7, in the first place.

In Step S101, the medium 8 is loaded on the medium loading section 2 of the recording apparatus 1, the digital camera 7 and camera-equipped cellular mobile telephone 7a are connected to the equipment connection 3, the network connection is connected to the communications network 15, or the recording medium 9 is loaded on the recording medium loading section 4. As described above, a CD-R/RW, DVD±R/RW, DVD-RAM or Blu-ray disc can be used as the recording medium 9. In the present Example, the recording medium 9 serves as an original recording site. Accordingly, to ensure that the image data will not be deleted, it is preferred to use the medium protected against deletion or overwriting or to provide settings so as to protect against deletion or overwriting. In Step S102, the image data recorded on the digital camera 7 or medium 8 or the image data recorded on the web server 16a are read out, and the display section 5 and operation section 6 is used to select the image data to be recorded on the recording medium 9, as required.

In Step S103, the music data to be used as the BGM for reproducing the image data as a slide show with music as required is read from the medium 8, web server 16a, the storage device of the recording apparatus 1. This music data may be selected by a user. Alternatively, it is possible to use the music data preset as a default.

In Step S104, the thumbnail image data obtained by reducing the size of the image data having been read, and the reduced image data such as the screen-nail image data are created, as required. The size of the reduced image data need only be smaller than that of the image data having been inputted. For example, the image data with a reduced number of pixels or the image data with a reduced number of colors and reduced size of the color reproduction area can be used.

In Step S105, as required, the image data having been read is converted into the animation data (data in the format of Video-CD, DVD-Video and HDTV) of the file format that can be read by the image reproduction apparatus such as a DVD player, DVD recorder, HDD recorder or game machine. In this case, no restriction is imposed on the method of creating animation data from the image data. For example, when displaying the still image data like a slide show, the data having no difference corresponding to the time for slide display is added to the still image data, whereby animation data is created. The difference data based on the slide effect set on the slide show program is added to the still image data, whereby animation data is generated.

The image data having been inputted, reduced image data having been created, and animation data having been converted are recorded on the recording medium 9. In this case, it is possible to arrange such a configuration that the data can be recorded on a desired recording medium 9, or data can be recorded only in the properly created recording medium 9.
For example, in Step S106, reference is made to the position information (e.g., physical address) stored in the storage device in advance, and a decision is made to see whether or not specific identification information is written in the aforementioned position in advance. The record the data is started only when identification information is written, according to this method.

In this case, the aforementioned identification information is provided to prevent illegal data from being recorded. Accordingly, if the recording site and contents of the identification information are easily made public, identification information itself will be copied, and illegal data recording cannot be prevented. To avoid this problem, at least part of the identification information is preferably written in the area that is inaccessible to the computer OS (i.e., outside the logical address area). To put it more specifically, it is preferably written in the area inside the logical address area of the disk type recording medium.

The following describes the structure of the general recording medium (CD-R) with reference to Fig. 13. The CD-R is formed by an organic color layer 101 such as cyan, phthalocyan and azo, a reflecting layer 102 such as silver, and a protective layer 103 laminated on the polycarbonate substrate 100. The laser beam of a predetermined power is applied to the organic color layer 101 to decompose pigments and to deform the substrate, whereby a pit is formed and information is recorded. The laser power has the optimum value that differs according to the type of the laser head for emitting the laser beam, and the type of the organic color layer 101 to be used. To ensure correct writing and reading of information, the drive side must identify the pigments used in the production of the CD-R. Thus, in the step of manufacturing the recording medium 9, information on the type of the pigments used in the CD-R or the name of the CD-R manufacturer is written on the innermost periphery. This information is read by the firmware of the drive. The firmware independently controls the laser head to adjust the laser power. As described above, the innermost periphery of the disk is used as the area for recording the information on the properties of the CD-R, and is inaccessible to the OS. Thus, when identification information of the recording medium 9 is written in this area (outside the logical address area), it is possible to prevent the identification information itself from being copied.

There is not restriction to the specific configuration of the identification information. However, as described above, the manufacturer's name is recorded outside the logical address area of the recording medium 9 in advance. Accordingly, the manufacturer's name and the number assigned to the recording medium 9 are used as identification information. This arrangement provides easy and reliable identification of whether or not the recording medium 9 has been created legally.

Various forms of data are recorded on the recording medium 9 containing the identification information. The recording area wherein data can be read is restricted in the image reproduction apparatus. The animation data whose file format has been transformed in Step S107 and associated file (hereinafter referred to as "image reproduction apparatus data group" collectively) are transferred to the predetermined folder preset for writing purpose. After that, the image reproduction apparatus data group is read from the aforementioned folder and is recorded on the logical address area of the recording medium 9. After that, in Step S108, before the computer apparatus data is recorded, the session is once closed in order to identify the area of the data that can be used by the image reproduction apparatus.

In Step S109, the image data, the application such as a slide show program as required, setup file, information file, music data and others (hereinafter referred to as "data group for computer apparatus" collectively) are transferred to the predetermined folder preset for writing purpose. After that, data group for computer apparatus is read from the aforementioned folder and is recorded outside the image reproduction apparatus data group previously recorded on the recording medium 9. A series of writing steps is now complete. The image data may be recorded on any desired form. To reduce the data volume, for example, the data can be recorded after being compressed by a commonly known compression technique.

Various forms of information are recorded on the recording medium 9 created according to the aforementioned procedure, as shown in Fig. 12. The identification information of a predetermined format (preferably a data format other than file format) is recorded outside of the logical address area on the innermost periphery of the disk type recording medium 9, as required. The image reproduction apparatus data group is recorded onside the logical address area outside thereof, as required. A data group for computer apparatus including the image data is recorded on the portion located further outside.

Further, the recording structure of the recording medium 9 created according to the aforementioned procedure is as shown in Fig. 10, for example. The data group for computer apparatus includes:
a plurality of types of image data (image data group) such as image data, thumbnail image data and screen-nail image data inside the "PS_Roll" folder;
an information file (info.txt) containing the management information such as information for specifying the recording site of the recording medium 9, and the identification information of the recording medium 9;
other data groups such as a slide show program inside the "APPL" folder, slide show setup file and automatic start-up file (Autorun.inf).

The image reproduction apparatus data group includes:
a file for associating the image data inside the "VCD" folder as a Video-CD format, DVD-Video format, HDTV format data or the like; and
an application for displaying the image data displayed on the TV screen inside the "SEGMENT" folder, the animation data inside the "MPEGAV" folder and the still image data on the TV screen inside the "DAT" folder.

There is no restriction to the structure for recording the aforementioned image data group. However, to facilitate management when the image data group has been backed up in the data management apparatus 10 or the like, it is preferred to configure the folder according to a predetermined rule and to assign a unique name to the folder. For example, as shown in Fig. 10, a folder (ROYYMMDDyyy_XXXXXXAABxxx; in this case, RO030416001_12345601C001) showing the image data storage location for each medium 8, each device and each film is created in the hierarchy below the folder (PS_Roll) representing the image data storage location. The elements may be specified as "YYMMDD: numerals to specify the Year/month/date of writing", "yyy: daily sequential number", "XXXXXX: random ID number", "AA: manufacturer code (00 through ZZ)", "B: software, equipment product category (0 through Z)" and "xxx: sequential number". In Fig. 10, a text format file is shown as an information file containing the management information such as the identification information of recording medium 9. In this case, there is no restriction to the information file format. For example, it is possible to use a special-purpose file (e.g., a file with the extension of pvm) recommended in the photo industry. The file of this format records the image reproduction apparatus reproduction instruction information (e.g., the order of reproduction, slide intervals, slide effect, image rotation and BGM), the image search information (manually inputted information, the information automatically identified by application, the image header information recorded at the time of photographing), the data history information (information on copying and migration, and image data storage path information), ID information (e.g., disk ID, shop ID and shop URL). Accordingly, various forms of information described in the information file can be used.

Referring to the flow chart diagram of Fig. 8, the following describes the procedure wherein the image data group recorded on the recording medium 9 created by the aforementioned recording apparatus 1 is stored into the storage and management area by a management program.

In Step S201, the recording medium 9 is loaded on the recording medium loading section 14 of the data management apparatus 10. Then in Step S202, the input control section 17 reads an image data group from the recording medium 9. In this case, it may read all the image data recorded on the recording medium 9. Alternatively, if part of the image data recorded on the recording medium 9 is already recorded on the data management apparatus 10, the image data corresponding to the difference may be read. In Step S203, the file is checked to see whether or not the file of the data having been read is damaged. In Step S204, the aforementioned image data group and information file are recorded on the destination recording site of the hard disk 11 or others by the recording control section 18.

There is no restriction to the structure for recording the image data stored according to the aforementioned procedure. However, to facilitate image data management, it is preferred that, if the image data is recorded on the recording medium 9 according to the recording structure shown in Fig. 10, the image data should be recorded, with the current data structure kept unchanged. In this case, the image data recording structure in the hard disk 11 is as shown in Fig. 11. The folder (PS_Roll) representing the image data storage location is created in a desired recording site of the hard disk 11. A folder (R0030416001_12345601C001 in this case) showing the newly added image data storage location is created in the lower hierarchy in addition to the folder (ROYYMMDDyyy_XXXXXXAABxxx) storing and managing the image data having been registered already. The original image data (OR030416000001.jpg through OR030416000010.jpg) is stored in this folder. Further, the thumbnail image data (TH030416000001.jpg through TH030416000010.jpg) is stored in the folder (THM) representing the storage location of the thumbnail image data, and the screen-nail image data (SC030416000001.jpg through SC030416000010.jpg) is stored in the folder (SCREEN) showing the screen-nail image data storage location. Also included is the information file (info.txt) containing the information for specifying the structure of the aforementioned image data and the recording site in the recording medium 9, and the management information such as identification information of recording medium 9. Further, the folder (wherein the meaning of the PSYYMMDDyyy_XXXXXXAAB: YYMMDD, yyy, XXXXXX, AA, B is the same as the aforementioned) showing the storage location of the image data having immigrated can be created in the higher hierarchy of the PS_Roll folder.

In Step S205, to facilitate image data management, the information described in the information file is registered as a database as required. There is no restriction to the contents of this database. For example, configuration is possible using the album table containing the description of album information, the roll table containing the description of image data group (roll) information, the file table containing the description of image data information, or the exif table containing the description of image data information of the exif format.

The album table is made up of the identification information of recording medium 9 (album ID), the recording medium 9 title (album title), information on the date and time of photographing, the album status indicating the stored image data type (e.g., whether or not the original image data is recorded, or only the reduced image data is recorded), the album type showing whether or not the album is registered as a favorite, and the album link showing whether or not the image data in the album is linked. The roll table is composed of the album ID, image data group (roll) identification information (roll ID), the total image count indicating the quantity of the image data in the roll, and the information on the year/month/day of roll creation. The file table is made up of the roll ID, file name, frame number, file type, file storage site, the rotation information showing whether or not the image is rotated, the file link showing whether or not the file is linked, and the storage status information showing whether or not the original image data is present. The exif table is made up of the roll ID, file name, information on the time and date of photographing, image title and image memorandum.

In the hard disk 11 where the image data has been recorded according to the aforementioned procedure, information on the recorded image data is stored in the information file and database. This arrangement prevents the stored and imaged image data from becoming unclear. For example, as described above, when the user has deleted the image data by an application other than the management program, the information on the deleted image data is not reflected in the information file or database to be generated or updated by the management program. This will result in disagreement between the image data configuration described in the information file (i.e., the configuration of the image data registered by the management program) and the configuration of the actually recorded image data. Thus, the image data registered in the information file but not recorded actually (i.e., missing image data) may be present. In this case, the missing image data is restored according to the procedure shown in the flow chart of Fig. 9 in the present Example.

In Step S301, a predetermined program such as an image display program is started. Then in Step S302, the missing data detection section 19a reads the information file recorded on a predetermined position (ROYYMMDDyyy_XXXXXXAABxxx folder in this case) of the hard disk 11 by referring to the description of the aforementioned information file, and specifies the configuration of the image data stored and managed as an electronic album. In Step S303, a step is taken to specify the configuration of the image data actually recorded on a predetermined position (ROYYMMDDyyy_XXXXXXAABxxx folder, THM folder and SCREEN folder in this case) of the hard disk 11. In Step S304, the configuration of image data based on the information file is compared with the configuration of actually recorded image data to check if there is any missing image data that is described in the information file but not actually recorded.

If there is any missing image data, the data restoration section 19c in Step S305 refers to the information file and extracts the identification information of the recording section (recording medium 9 in this case) containing the missing image data, and the information for specifying the image data recording site in the aforementioned recording section.

In Step S306, the data restoration section 19c determines whether or not the aforementioned recording section can be accessed by the data management apparatus 10. In other words, in the case of the recording medium 9, a decision is made to see whether or not the recording medium 9 containing the aforementioned identification information is loaded in the recording medium loading section 14 of the data management apparatus 10. If the recording section is accessible, reference is made to the information for specifying the recording site in Step S309. Then the image data is read from the recording medium 9 and is written into a predetermined recording site inside the hard disk 11. When the image data recorded on the recording section of the recording site is recorded on a compressed form, the compressed image data is read from the recording section. Then the image is decompressed by a commonly known data decompression technique, and the result is written into a predetermined recording site of the hard disk 11.

If the recording section cannot be accessed by the data management apparatus 10, the information for specifying the recording site and the message for prompting the recording site to become accessible are displayed in the display section 12 in Step S307, (wherein the latter message is exemplified by a message for prompting the recording medium 9 containing the aforementioned identification information to be loaded on the recording medium loading section 14 when the recording site is a recording medium 9, and a message for prompting in such a way that, when the recording site is a home server 16b or web server 16a), such a recording site should be connected to the data management apparatus 10 via the network. When the recording section becomes accessible in Step S308, the image data is read and is written into the hard disk 11 in Step S309. Thus, even when image data is missing, a series of the aforementioned processing ensures the aforementioned image data to be restored into the hard disk 11.

In Step S310, the image data is displayed on the display section 12 of the data management apparatus 10. In this case, the image data can be displayed in a desired form. For example, it can be displayed on the image display screen 20, as shown in Fig. 14. This image display screen 20 is provided, for example, with a tag display column 21 for identification of the image data group, an image display column 22 wherein the images based on the image data stored and managed for each recording medium are displayed in a tabulated list format, and a work menu column 23 wherein processing using the image data is displayed for selection.

The aforementioned tag display column 21 is provided with the button for the information including the identification information of recording medium 9, the date and time information such as the year/month/day of image data photographing and the album title for each of the recording sections (recording medium 9) of the image data recording site. The image data can be selected for each recording medium 9. Further, the tag display column 21 is provided with "album title change" button to change the album title or the like. Further, and the frames wherein the image based on the image data stored and managed for each recording medium is displayed in a tabulated list are arranged in the image display column 22. Various types of buttons for changing the image display format are provided on the lower side. Further, the work menu column 23 is provided with the button for creating and copying the new recording medium using the image displayed on the image display column 22, the button for registering the image data as a favorite item, the button for transmitting the image data via the electronic mail, and the button for printing the image by a printer for household use or by a photo shop.

The button displayed on the tag display column 21 is selected to display the image based on the image data corresponding to a desired recording medium 9. A desired image is selected from among the images displayed on the image display column 22. Then in Step S311, a desired button of the work menu column 23 is pressed and the aforementioned image data is used to create a new recording medium or to organize the data as a new album. This is added to the electronic mail and is transmitted, whereby various forms of processing such as outputting as a print are carried out.

As described above, in the present Example, in the structure wherein the image data recorded on the recording section of the recording site of the recording medium 9 or the like is stored in the recording site of the hard disk 11 of the data management apparatus 10 for each recording medium 9 and is managed therein, the configuration of image data described in the information file is compared with the actually recorded the configuration of image data at the time of starting the image display program. If missing image data is present, it is restored automatically. Accordingly, image data can be stored and managed correctly as an electronic album.

In the aforementioned description, comparison of the data configuration and data restoration are performed at the time of starting the image display program. Processing can be carried out at any timing. Comparison of the data configuration and data restoration can be performed at predetermined time intervals (e.g., every week) or at a predetermined point of time (e.g., 12 o'clock). Alternatively, as shown in Fig. 15, it is also possible to arrange such a configuration that the image display screen 20 is provided with a data restoration button 23a, and if there is any image data without image displayed (crossed in the Figure), the user presses the data restoration button 23a, whereby comparison of the data configuration and data restoration are performed.

To describe the case wherein there is no agreement between the configuration of image data based on the information file and the configuration of actually recorded image data, the above description has referred only to the case wherein the image data is missing. Conversely, when the user has added image data using other applications, there may be presence of the image data that is not described in the information file but is recorded actually. In this case, the aforementioned image data may or may not be contained in the image data managed as an electronic album. When the data is to be stored and managed in the same manner as other image data, the information on the aforementioned image data can be acquired by referring to the file name of the aforementioned image data and header information, and the information can be described in the information file and database.

### [Example 2]

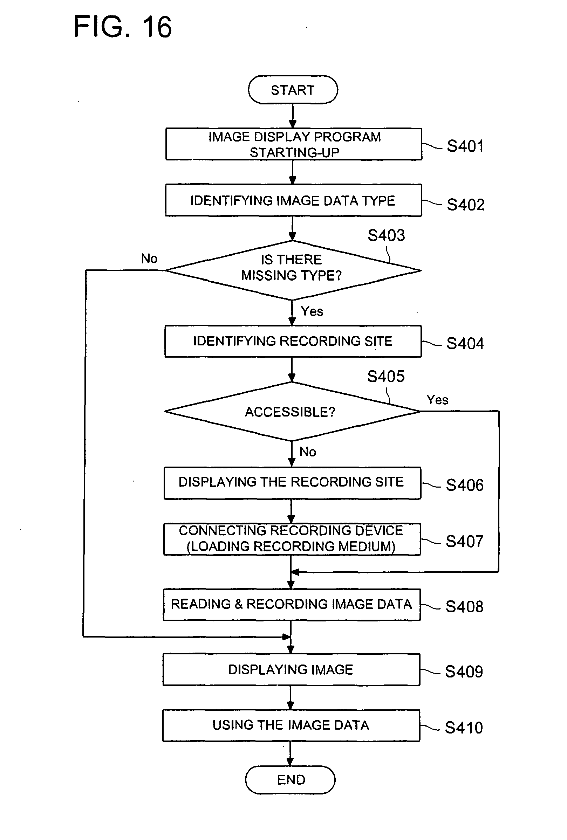

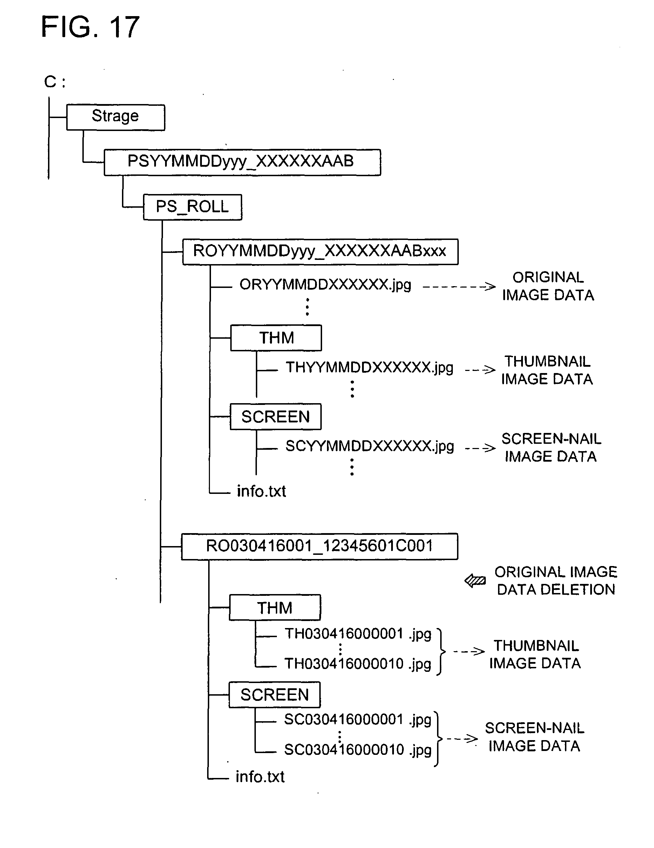

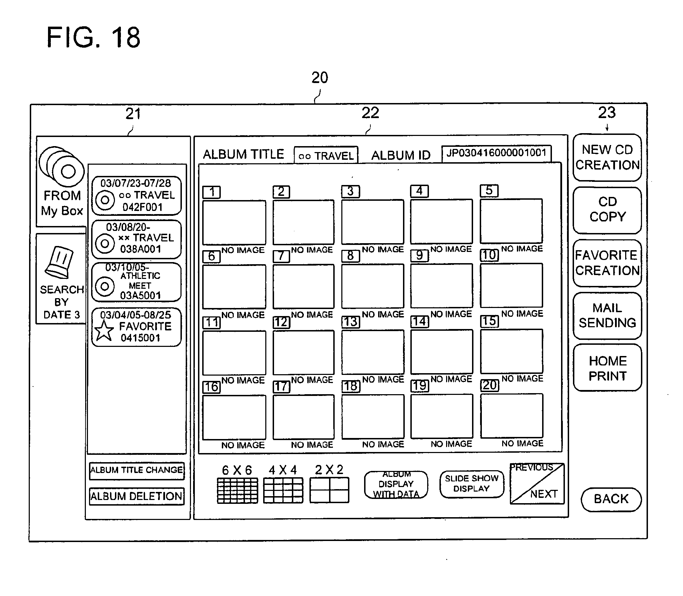

The following describes the management program as a second Example of the present invention with reference to Figs. 16 through 18. Fig. 16 is a flow chart diagram showing the image data restoration procedure using the data management apparatus. Fig. 17 is a diagram showing the data recording configuration. Fig. 18 is a diagram representing an example of the screen configuration displayed on the display section of the data management apparatus.

The above description in the aforementioned first Example refers to the case of specifying the individual image files and restoring the missing image data. When the image data recorded on the recording medium 9 is classified into a plurality of types, the image data may be deleted for each type. Thus, the following describes the procedure of restoring the image data when it has been deleted for each type in the present Example.

In the present Example as well, as shown in Fig. 6, the data management apparatus 10 contains:
an input control section 17 for reading the image data and identification information from the recording medium 9 loaded on the recording medium loading section 14;
a recording control section 18 for controlling the process of recording the image data on the recording section such as a hard disk 11;
a missing data detection section 19a for determine whether or not the image data recorded on the recording section is configured in a plurality of predetermined types, and for detecting the missing type of image data;
a data restoration section 19c for displaying the information to be displayed on the display section 12, the aforementioned information being the information for specify the recording site for the missing type of image data (recording medium 9 in this case), acquiring the aforementioned type of image data from the recording site or specifying the recording site of the aforementioned type of image data;
a display section 12 such as a monitor; and
an operation section 13 such as a keyboard or mouse.

Referring to the flow chart diagram of Fig. 16, the following describes the procedure of restoring the missing type of image data using the data management apparatus 10 of the aforementioned structure. Either of the following two structures can be used: (1) The missing type of image data is deleted by other applications, and the description of the information file fails to agree with the actually recorded image data. (2) The missing type of image data is deleted by the management program and the description of the information file agrees with the actually recorded image data.

In Step S401, a predetermined program such as an image display program is started. Then in Step S402, reference is made to the file name of the image data recorded in a predetermined location (ROYYMMDDyyy_XXXXXXAABxxx folder, THM folder and SCREEN folder) of the hard disk 11, thereby specifying the image data type (e.g., original image data, thumbnail image data, screen-nail image data) recorded in the hard disk 11. Then in Step S403, a check is made to see whether or not the recorded image data is configured in a plurality of preset types.

If there is a missing type (e.g., the original image data is not recorded when three types of data -- original image data, thumbnail image data and screen-nail image data-- are necessary in this configuration as shown in Fig. 17, or either the thumbnail image data or screen-nail image data is recorded), the data restoration section 19c refers to the description of the information file related to the image data of the type currently recorded in Step S404 to extract the information for specifying the recording section containing the missing type of image data, or the information for specifying the recording site of the missing type of image data in the aforementioned recording section.

In Step S405, the data restoration section 19c determines whether or not the aforementioned recording section is accessible to the data management apparatus 10. Namely, in the case of the recording medium 9, the data restoration section 19c determines whether or not the recording medium 9 containing the aforementioned identification information is loaded on the recording medium loading section 14 of the data management apparatus 10. If it is accessible, the missing type of image data is read from the recording medium 9 in Step S408, and is recorded in a predetermined recording site of the hard disk 11. If it is not accessible, the information for specifying the recording site of the missing type of image data is displayed on display section 12 in Step S406. When the recording medium 9 is made accessible in Step S407, the image data of that type is read in Step S408 and is written onto the hard disk 11. Thus, even when a specific type of image data is missing, a series of the aforementioned processing ensures the aforementioned type of image data to be restored into the hard disk 11.

In the present Example as well, the image data can be recorded on the recording section in any form. When it is recorded in a compressed form, the compressed image data is read from the recording section. After that, it is decompressed and is written into the predetermined recording site of the hard disk 11.

Then in Step S409, similarly to the case of the first Example, the following items, for example, are indicated as shown in Fig. 14: a tag display column 21 for identifying the image data group; an image display column 22 wherein the image is displayed in a tabulated list based on the image data stored and managed for each recording medium; and an image display screen 20 provided with the work menu column 23 wherein processing by the use of image data can be selected.

The button displayed in the tag display column 21 is selected so that the image data corresponding to a desired recording medium 9 is displayed. A desired image is selected from the image displayed on the image display column 22. After that, in Step S410, a desired button of the work menu column 23 is pressed, and the aforementioned image data is used to create a new recording medium or is organized as a new album. It is attached to the electronic mail and is transmitted, or is outputted as a print. It is used for various forms of processing.

In the above description, detection and restoration of the missing type of image data are performed when the image display program is started. Similarly to the case of the first Example, the aforementioned processing can be performed at any timed intervals. It can be performed at predetermined time intervals or a predetermined point of time. For example, as shown in Fig. 17, an image display screen 20 is provided with a data restoration button 23a. If there is no specific type of image data (e.g., in the case of Fig. 17, only the original image data is deleted by the management program, and "No present image" is displayed close to the image of the image display column 22), the user presses the data restoration button 23a, and detection of the missing image data and restoration can be performed.

As described above, in the present Example, the image data is stored and managed in the recording site of the hard disk 11 of the data management apparatus 10 for each recording medium 9 or for each type. In this arrangement, when the image display program is started, a decision step is taken to see whether or not the image data recorded on the recording section is configured as a plurality of predetermined types. If there is a missing type of image data, it is automatically restored. This ensures reliable storage and management of the image data as an electronic album.

### [Example 3]

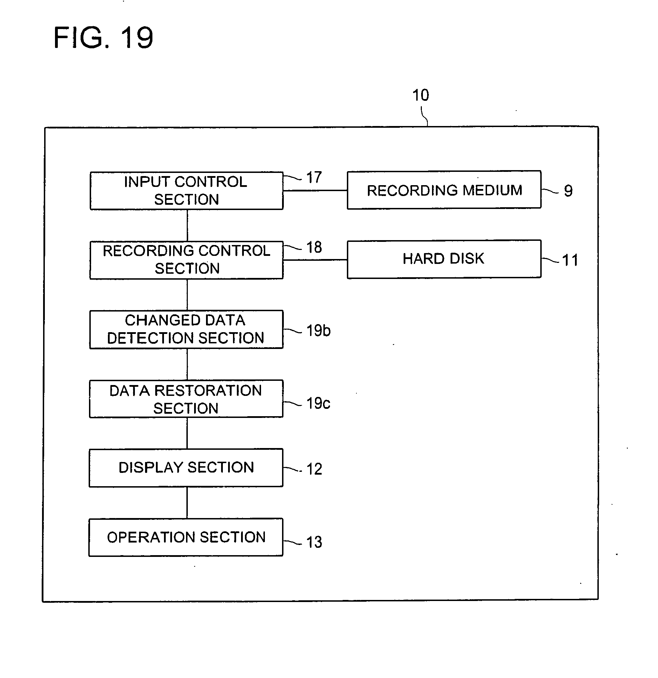

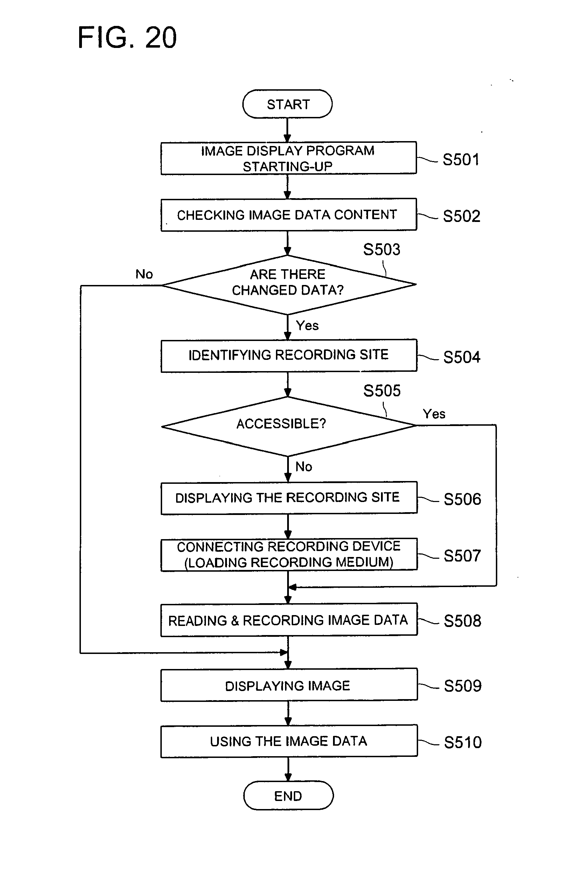

The following describes the management program as a third Example of the present invention with reference to Figs. 19 and 20. Fig. 19 is a block diagram showing the means of the data management apparatus. Fig. 20 is a flow chart showing the image data restoration procedure using the data management apparatus.

The aforementioned first and second Examples have been described with reference to the case wherein the relevant image file is not present. The image data itself is present, but the contents of the image are modified for some reason in some cases. Namely, the inherent properties of the image data are damaged in some cases. In such cases, the storage and management of the image data cannot be said to have been ensured. Accordingly, the following describes the procedure of restoration in the present Example, wherein the contents of the image data have been changed.

In the present Example, this data management apparatus 10 is arranged as shown in Fig. 19. To be more specific, it includes:
an input control section 17 for reading the image data or identification information from the recording medium 9 loaded on the recording medium loading section 14;
a recording control section 18 for controlling the step of recording the identification on the recording section of the hard disk 11;
a content change data detection section 19b for detecting the contents-changed image data by checking to see whether or not the contents of the image data have been changed;
a data restoration section 19c for ensuring that the information for identifying the recording site of the contents-changed image data (recording medium 9 in this case) to acquire the image data as a basis of the contents-changed image data from the recording site or the information for identifying the recording site of the image data as a basis of the contents-changed image data are displayed on the display section 12;
a display section 12 such as a monitor; and
an operation section 13 such as a keyboard and mouse.

Referring to the flow chart diagram of Fig. 20, the following describes the procedure of restoring the contents-changed image data using the data management apparatus 10 of the aforementioned arrangement.

In Step S501, a predetermined program such as an image display program is started. Then in Step S502, the content change data detection section 19b detects the contents-changed image data by taking a decision step of determining if the contents of the image data recorded in the predetermined location (ROYYMMDDyyy_XXXXXXAABxxx folder, THM folder, SCREEN folder in this case) of the hard disk 11 have been changed or not. The aforementioned the contents-changed image data is defined as the image data of the same file name containing the portion different from the image data recorded in the recording medium 9. Such image data is exemplified by the image data having been overwritten subsequent to the step of edition and processing, the image data that contains the missing data constituting the image data or the extra data added thereto, and the image data containing a change in the contents of the subsidiary information described in the header area. There is no restriction to the method of detecting the contents-changed image data. For example, whether image data is overwritten or not can be determined as follows: Comparison is made of the date and time information (time stamp) described in the header area of a series of image data. If the date and time information is relevant (e.g., when arranged according to file name, the date and time of the relevant image data are the same as the date and time of the preceding or succeeding image data, or are intermediate in-between), then the image data is determined as having not been overwritten. If the date and time information are irrelevant (e.g., the date and time of the target image data are not intermediate between the date and time of the preceding succeeding image data), then the image data is determined as having been overwritten. Alternatively, the parity (the sum total of the bits is even or odd) or hash value (a value obtained by computation from the last bit row using a hash function) of the image data as a basis is recorded in the information file in advance. If there is agreement between the parity or hash value of the target image data and the parity or hash value described in the information file, then the image data is determined as not having been overwritten. If there is no agreement, the image data is determined as having been overwritten. In this manner, a decision can be made by comparison between the information recorded in the information file and the properties of the target image data itself.

In Step S503, the contents of the image data have been changed. Then in Step S504, the data restoration section 19c refers to the information file, whereby the information for specifying the recording section containing the image data as a basis of the contents-changed image data or the information for specifying the recording site is extracted from the file name and others.

In Step S505, the data restoration section 19c determines whether or not the aforementioned recording section is accessible to the data management apparatus 10; namely, whether or not, in the case of the recording medium 9, the recording medium 9 containing the aforementioned identification information is loaded on the recording medium loading section 14 of the data management apparatus 10. If it is accessible, the image data is read from the recording medium 9 in Step S508, and is written to a predetermined recording site of the hard disk 11. If it is not accessible, the information for specifying the recording site of the image data is displayed on the display section 12 in Step S506. When the recording medium 9 is made accessible in Step S507, the image data is read in Step S508, and is written on the hard disk 11. Thus, a series of the aforementioned processing ensures the aforementioned type of image data to be restored into the hard disk 11, even when the contents of specific image data have been changed.

In the present Example, the image data recorded in the recording section may be recorded in any form. When it is recorded in a compressed form, the compressed image data is read from the recording section. After that, it is decompressed and is written into the predetermined recording site of the hard disk 11.

Then in Step S509, similarly to the case of the first and second Examples, an image display screen 20 shown in Fig. 14 is displayed. The button displayed in the tag display column 21 is selected and the image data corresponding to a desired recording medium 9 is displayed. A desired image is selected from among the images displayed in the image display column 22. Then in Step S510, a desired button of the work menu column 23 is pressed so that the aforementioned image data is used to create a new recording medium or to organize the data as a new album. This is added to the electronic mail and is transmitted, whereby various forms of processing such as outputting as a print are carried out.

In the present Example as well, detection or restoration of the contents-changed image data can be processed at any time. It can be processed at predetermined time intervals or a predetermined point of time. It is also possible to arrange such a configuration that the detection or restoration of the contents-changed image data is processed when the user has pressed the data restoration button 23a.

As described above, in the present Example, in a structure wherein image data is stored in the recording site of the hard disk 11 of the data management apparatus 10 for each recording medium 9, and is managed therein, when the image display program is started, a check is made to see whether the contents of the image data recorded in the recording section have been changed or not. If there is any contents-changed image data, it is automatically restored. This arrangement ensures reliable storage and management of the image data as an electronic album.

The aforementioned Example has been described with reference to the case of managing the image data using a management program, without the present invention being restricted thereto. The present invention also applies to the cases of managing other type of data including music data and contents using the management program.

### [Industrial Field of Application]

The management method and management program of the present invention provide reliable storage and management of the image data backed up by copying from the recording site (e.g., recording medium) to the recording site (e.g., hard disk).

## Claims

1. A management method for storing a plurality of image data recorded in a first recording section into a second recording section and for managing the plurality of image data, based on an information file containing management information, the management method comprising:
detecting a difference between a first data configuration of image data recorded in the second recording section and a second data configuration of image data described in the information file, by making comparison between the first data configuration and the second data configuration; and
restoring data, when the difference is detected between the first data configuration and the second data configuration, by reading out image data corresponding to the difference from the first recording section with referring to the information file, and by recording the image data corresponding to the difference into the second recording section.

2. The management method of claim 1, wherein when a missing image data which is described in the information file but not recorded in the second recording section is detected in the detecting step, in the restoring step reading out the missing image data from the first recording section with referring to the information file and recording the missing image data into the second recording section.

3. The management method of claim 1, wherein when in the detecting step determined is whether or not the image data recorded in the second recording section is configured according to a plurality of predetermined types, and detected is image data of a missing type which is recorded in the first recording section but not recorded in the second recording section among the plurality of predetermined types, in the restoring step reading out the image data of the missing type from the first recording section with referring to the information file and recording the image data of the missing type into the second recording section.

4. The management method of claim 1, wherein in the detecting step further checked is the image data recorded in the second recording section, and when the image data whose contents have been modified is detected by the detecting step, in the restoring step reading out original image data of the image data whose contents have been modified from the first recording section with referring to the information file and recording the original image data on the second recording section.

5. The management method of any one of claims 1 to 4, wherein the information file contains at least information for identifying the first recording section and information for identifying a recording site of image data in the first recording section.

6. The management method of claim 5, wherein in the restoring step, when the first recording section is not accessible, displaying the information for identifying the first recording section and the information for identifying the recording site in the first recording section for original image data which is a basis of missing image data or image data whose contents have been modified on a display section.

7. The management method of any one of claims 1 to 6, wherein the detecting step and the restoring step are conducted at a time of displaying an image based on image data on a display section, at predetermined time intervals, or at predetermined time.

8. The management method of any one of claims 1 to 7, wherein the image data is recorded with compression in the first recording section

9. The management method of any one of claims 1 to 7, wherein image data is recorded in a state where the image data cannot be deleted or overwritten, in the first recording section.

10. The management method of any one of claims 1 to 9, wherein in the first and second recording sections, image data is stored into the folder of a name generated in conformity to a predetermined rule according to a unit of the first recording section or according to a type of image data.

11. A management program for storing a plurality of image data recorded in a first recording section into a second recording section and for managing the plurality of image data, based on an information file containing management information, the management program being configured to allow a computer to function as:
a detection section for detecting a difference between a first data configuration of image data recorded on the second recording section and a second data configuration of image data described in the information file, by making comparison between the first data configuration and the second data configuration; and
a restoration section for restoring data, when the difference is detected between the first data configuration and the second data configuration, by reading out image data corresponding to the difference from the first recording section with referring to the information file, and by recording the image data corresponding to the difference into the second recording section.

12. The management program of claim 11, wherein when the detection section detects a missing image data which is described in the information file but not recorded in the second recording section, the restoration section reads out the missing image data from the first recording section with referring to the information file and records the missing image data into the second recording section.

13. The management program of claim 11, wherein when the detection section determines whether or not the image data recorded in the second recording section is configured according to a plurality of predetermined types, and detects image data of a missing type which is not recorded in the second recording section among the plurality of predetermined types, the restoration section reads out the image data of the missing type from the first recording section with referring to the information file and records the image data of the missing type into the second recording section.

14. The management program of claim 11, wherein the detection section further checks the image data recorded in the second recording section, and when the image data whose contents have been modified is detected by the detection section, the restoration section reads out original image data of the image data whose contents have been modified from the first recording section with referring to the information file and records the original image data into the second recording section.

15. The management program of any one of claims 11 to 14, wherein the information file contains at least information for identifying the first recording section and information for identifying a recording site of image data in the first recording section.

16. The management program of claim 15, wherein, when the first recording section is not accessible, the restoration section displays on a display section the information for identifying the first recording section, and the information for identifying the recording site in the first recording section for original image data, which is a basis of the missing image data or the image data whose contents have been modified.

17. The management program of any one of claims 11 to 16, wherein the management program allows the computer to function as the detection section and the restoration section, at a time of displaying an image based on the image data on a display section, at predetermined time intervals, or at predetermined time.

18. The management program of any one of claims 11 to 17, wherein image data is recorded with compression in the first recording section.

19. The management program of any one of claims 11 to 17, wherein image data is recorded in a state where the image data cannot be deleted or overwritten, in the first recording section.

20. The management program of any one of claims 11 to 19, wherein in the first and second recording sections, image data is stored into the folder of a name generated in conformity to a predetermined rule according to a unit of the first recording section or according to a type of image data.
